# EUROPÄISCHE PATENTANMELDUNG

(11) **EP 3 053 427 A1**
(43) Veröffentlichungstag der Anmeldung: **10.08.2016**
(21) Anmeldenummer: 16152368.3
(22) Anmeldetag: 22.01.2016
(51) Int. Cl.: A01C 15/00, B65D 88/28, A01C 7/08, A01C 7/12

(54) **PNEUMATISCHE SÄMASCHINE**

(30) Priorität: 04.02.2015 DE 102015101572
(71) Anmelder: Horsch Maschinen GmbH, 92421 Schwandorf (DE)
(72) Erfinder: KÖBLER, Manfred, 92421 Schwandorf (DE)
(74) Vertreter: Benninger, Johannes

(57) **Zusammenfassung**

Es ist eine pneumatische Sämaschine offenbart, umfassend wenigstens einen Vorratsbehälter (10), zur Aufnahme und Bereitstellung eines auszubringenden Produkts, und eine an diesem angebrachte Dosiervorrichtung (16), in welcher Dosiervorrichtung (16) ein Dosierorgan (28) drehbar angeordnet ist, welches mittels eines Antrieb (26) in Drehung gebracht wird, um das durch den Vorratsbehälter (10) bereitgestellte Produkt in ein Fördersystem zu dosieren, wobei dem Vorratsbehälter (10) und/oder der Dosiervorrichtung (16), eine Absperrvorrichtung (30) zugeordnet ist, welche zwischen einer geöffneten Position, in welcher es dem Produkt ermöglicht wird von einem Vorratsbehälter (10) zu einer Dosiervorrichtung (28) und/oder zum Fördersystem zu fließen, und einer geschlossenen Position, in welcher das Produkt daran gehindert wird von einem Vorratsbehälter (10) zu einer Dosiervorrichtung (28) und/oder zum Fördersystem zu fließen, beweglich ist, wobei die Absperrvorrichtung (30) einen Absperrschieber (36) aufweist, welcher sowohl in geöffneter als auch in geschlossener Position innerhalb des Vorratsbehälter (10) und/oder der Dosiervorrichtung (16) verbleibt, um einen Absperrschieber (36) zu schaffen der für verschiedene Vorratsbehälter (10) verwendet werden kann ist dieser aus einem elastischen Material und/oder sich zueinander bewegenden Sektionen (48) gefertigt welche zwischen der geöffneten und der geschlossenen Position sich verändernde Konturen und/oder Radien (52), und/oder Winkel (54) zueinander, aufweist.

## Beschreibung

Die vorliegende Erfindung betrifft eine pneumatische Sämaschine mit den Merkmalen des unabhängigen Anspruches 1.

Eine derartige Sämaschine ist bspw. durch die EP 2 022 309 B1 bekannt geworden. Die Maschine weist einen Vorratsbehälter und ein geschlossenes Drucksystem auf, bei dem der Vorratsbehälter einem höheren Druck als der atmosphärische Umgebungsdruck ausgesetzt ist. Dem Vorratsbehälter zugeordnet und in einem Gehäuse angeordnet ist ein Dosierorgan, welches das im Vorratsbehälter befindliche körnige Material in zumindest eine pneumatisch beaufschlagte Förderleitung einspeist. Zwischen dem unteren Ende des trichterförmigen Vorratsbehälters und dem Dosierorgan ist eine Absperrvorrichtung angeordnet. Die Absperrvorrichtung weist einen Absperrschieber zur bedarfsweisen Absperrung des Materialflusses aus dem Vorratsbehälter zum Dosierorgan bzw. zur Förderleitung sowie einen Abdichtschieber auf, mittels dem der sich im Gehäuse befindliche, zur Aufnahme des Absperrschiebers benötigte Gehäusespalt abgedichtet werden kann. Die Absperrvorrichtung ist hierbei derartig gestaltet, dass der Absperrschieber und der Abdichtschieber eine Einheit bilden.

Nachteilig an diesem System ist, dass die Absperrvorrichtung jeweils bei geänderter Funktion aus dem Gehäuse genommen werden muss, was den Bedienkomfort verschlechtert. Zudem ist der durch die Absperrvorrichtung sich im Gehäuse befindliche Spalt schwierig abzudichten, was wiederum zu einem Druckverlust im Vorratsbehälter und ggf. zu falschen Dosiermengen des Dosierorgans führen kann.

Ein Absperrschieber bzw. Klappen, die zwischen ihrer geöffneten und geschlossenen Stellung nicht aus dem Gehäuse genommen werden müssen und dementsprechend keine zusätzliche Abdichtung benötigen, sind aus der EP 2 260 689 B1 bekannt. Die Klappen werden jeweils mittels eines Stellgliedes zwischen einer geöffneten und einer geschlossenen Stellung innerhalb des Gehäuses verschwenkt. Eine derartige Anordnung hat zwar zur Folge, dass die Abdichtung des Systems wesentlich verbessert wird, jedoch müssen die schwenkbaren Klappen jeweils auf das Gehäuse angepasst werden, in welchem diese sich befinden, was wiederum den Nachteil hat, dass bei Verwendung von verschiedenen Gehäusen und/oder Vorratsbehältern jeweils separate Klappen benötigt werden.

Aus der DE 10 2007 016 760 A1 ist weiterhin ein Zentraldosierer mit zwei unabhängig voneinander betätigbaren Absperreinrichtungen für eine pneumatische Verteilmaschine bekannt, wodurch eine variable Zuschaltung oder Abschaltung von Teilbreiten beim Ausbringen von Körnern ermöglicht werden sollen.

Eine verstellbare Absperrvorrichtung für eine Dosiereinrichtung einer pneumatischen Verteilmaschine geht darüber hinaus aus der US 8 281 724 B2 hervor.

Der Erfindung liegt die Aufgabe zugrunde, eine Absperrvorrichtung einer pneumatischen Sämaschine zu schaffen, mittels derer ein Verschieben zwischen geöffneter und geschlossener Position weitgehend ohne Druckverlust ermöglicht wird, und welche für eine Vielzahl von Dosiervorrichtungen und/oder Vorratsbehältern Verwendung finden kann.

Diese Ziele der Erfindung werden mit dem Gegenstand mit den Merkmalen des unabhängigen Anspruchs erreicht. Merkmale vorteilhafter Weiterbildungen ergeben sich aus den abhängigen Ansprüchen.

So schlägt die Erfindung eine pneumatische Sämaschine vor, wie sie vorzugsweise in der Landwirtschaft zum Ausbringen und Verteilen von granulatartigen Produkten wie Saatgut, Dünger oder dergl. Verwendung findet. Diese Sämaschine besteht wenigstens aus einem Vorratsbehälter und einer, mittels einer Flanschfläche und bspw. Schrauben, an dieser angebauten Dosiervorrichtung. Mittels eines in der Dosiervorrichtung sich befindenden Dosierorgans kann das im Vorratsbehälter befindliche Produkt in ein vorzugsweise pneumatisches Fördersystem dosiert werden. Dem Vorratsbehälter und/oder der Dosiervorrichtung ist eine Absperrvorrichtung zugeordnet, welche zwischen einer geöffneten Position, in welcher es dem jeweiligen Produkt ermöglicht wird, vom Vorratsbehälter zum Dosierorgan und/oder zum Fördersystem zu fließen und einer geschlossenen Position, in welcher das Produkt daran gehindert wird, vom Vorratsbehälter zum Dosierorgan und/oder zum Fördersystem zu fließen, bewegt wird.

Die Absperrvorrichtung weist als absperrendes Element einen Absperrschieber auf, welcher sowohl in geöffneter als auch in geschlossener Position innerhalb des Vorratsbehälters und/oder der Dosiervorrichtung verbleibt, wodurch keine zusätzlichen Dichtelemente oder dergl. benötigt werden und wodurch die Gefahr eines Druckverlusts unterbunden wird. Dies ist insbesondere dann von Vorteil, wenn der Vorratsbehälter und/oder die Dosiervorrichtung mit einem Druckniveau beaufschlagt werden, welches größer ist als der Umgebungs- bzw. der Atmosphärendruck.

Die Absperrvorrichtung bzw. der Absperrschieber wird mittels einer Betätigungseinheit zwischen der geöffneten und der geschlossenen Position bewegt. Diese Betätigungseinheit kann bspw. als griffartiges Element ausgebildet sein, welches mittels wenigstens einer Durchführung durch den Vorratsbehälter und/oder die Dosiervorrichtung geführt wird und wahlweise manuell durch eine Bedienperson bewegt wird. Ebenso kann die Betätigungseinheit als elektrisch und/oder hydraulisch und/oder pneumatisch arbeitender Stellantrieb bspw. als Linearantrieb ausgebildet sein. Wiederum kann die Betätigungseinheit sich im Inneren des Vorratsbehälters und/oder der Dosiervorrichtung befinden, wodurch keine Durchführung benötigt wird, und wodurch keine zusätzlichen Dichtmittel nötig wären. In diesem Fall kann zur Ansteuerung bspw. ein elektrisches Schaltelement oder dergl. an der Sämaschine oder dessen Rechnereinheit vorhanden sein.

Um die Betätigungseinheit im Bereich der Durchführungen abdichten zu können, kann diese bspw. einen runden Querschnitt aufweisen, wodurch als Dichtelemente insbesondere Normteile wie O-Ringe oder dergl. Verwendung finden können, was kostengünstige Lösungen ermöglicht. Ebenso vorstellbar wären jedoch auch andere Querschnitte und Dichtelemente. Die Durchführung kann bspw. als hülsenartiges Element ausgebildet sein und in den Vorratsbehälter oder die Dosiervorrichtung montiert werden. Ebenso wäre jedoch auch vorstellbar, dass die Durchführung Teil einer Seitenwand des Vorratsbehälters oder des Gehäuses der Dosiervorrichtung ist. Auch denkbar wäre es, dass die Durchführung nicht als separates Teil, sondern die Seitenwand des Vorratsbehälters oder das Gehäuse der Dosiervorrichtung entsprechend gestaltet sind; auch in dieser Ausgestaltung können der Durchführung Dichtelemente zugeordnet sein.

Um den Absperrschieber in verschiedensten Vorratsbehältern und/oder Dosiervorrichtungen verwenden zu können, ist er aus einem elastischen Material und/oder sich zueinander beweglichen Sektionen gebildet. Der Absperrschieber weist dadurch jeweils zwischen und in der geöffneten und der geschlossenen Position sich verändernde bzw. unterschiedliche Radien und/oder Konturen und/oder unterschiedliche Winkel zueinander auf. Wobei diese wiederum in geöffneter Position zumindest abschnittweise weitgehend parallel zu wenigstens einer Innenwand des Vorratsbehälter und/oder der Dosiervorrichtung und in geschlossener Position zumindest abschnittweise weitgehend parallel zur wenigstens einer Flanschfläche des Vorratsbehälters angeordnet sein können.

Eine derartige elastische bzw. flexible Ausgestaltung hat den Vorteil, dass der Absperrschieber sich den jeweiligen Innenwänden entsprechend anpassen kann. Um diese Flexibilität und diese Anpassbarkeit noch zu verbessern, kann der Vorratsbehälter bspw. mit Führungen ausgestattet sein, entlang derer der Absperrschieber bewegt wird bzw. entlang derer der Absperrschieber sich anlegt. Ebenso wäre als Führung eine Führungskulisse vorstellbar, welche aus einer unteren und einer oberen Führungsbahn besteht und bei der der Absperrschieber sich zwischen diesen bewegt, wobei wiederum die obere und untere Führungsbahn einen Abstand aufweisen können der geringer ist als der Durchmesser der Körner des auszubringenden Produkt, wodurch sich keine Körner in der Führungskulisse einklemmen können .

Auch denkbar wären als Führung bspw. einzelne Bolzen und Schrauben oder dergl. Generell wären somit eine Vielzahl von Führungen vorstellbar.

Auch denkbar wäre es, keine separate Führung vorzusehen, sondern den Absperrschieber so anzuordnen, dass dieser entlang der Wände des Vorratsbehälters und/oder des Gehäuse der Dosiervorrichtung geführt wird. Die Führung ist vorzugsweise so gestaltet, dass keine Körner des Produkts in dieser verklemmen bzw. vom Absperrschieber jeweils verdrängt werden können, so dass der Absperrschieber jeweils leicht beweglich bleibt.

Der Absperrschieber kann bspw. aus einem metallischen Werkstoff gefertigt sein, bspw. aus sog. Federblech. Ebenso vorstellbar wären jedoch auch nichtmetallische Materialen wie flexibler Kunststoff oder ein Kunststoff-Faser-Verbundmaterial, das über die notwendige Festigkeit und ausreichende Flexibilität verfügt.

Weiter weist der Absperrschieber vorzugsweise eine Dicke bzw. eine Materialstärke auf, welche kleiner ist als der Durchmesser der Körner des auszubringenden Produkts. Dies hat den Vorteil, dass der Absperrschieber leicht bewegt werden kann, da somit durch diesen nicht viel Produkt verdrängt werden muss und dieser darüber hinaus einfach durch das Produkt hindurch bewegt werden kann. Vorzugsweise weist der Absperrschieber somit eine Materialstärke auf, welche nicht größer als ca. ein Millimeter ist, ggf. auch deutlich kleiner.

Aufgrund des elastischen Material und der geringen Materialstärke kann somit der Absperrschieber sich entsprechend der Innenwände des Vorratsbehälters und/oder der Dosiervorrichtung anpassen, wodurch dieser wiederum flexibel eingesetzt werden kann. Auch kann der Absperrschieber durch eine derartige Gestaltung im Inneren des Vorratsbehälters verbleiben und muss nicht nach außen geführt werden, wodurch lediglich die ggf. vorhandenen Durchführungen der Betätigungseinheit abgedichtet werden müssen.

In einer weiteren Ausgestaltung kann der Absperrvorrichtung ein Sensorelement zur Überwachung der Position des Absperrschiebers und/oder der Absperrvorrichtung zugeordnet sein.

Um die Ausbringmenge an Produkt einstellen zu können, kann die Absperrvorrichtung darüber hinaus derartig konzipiert sein, dass diese jeweils nicht komplett geöffnet bzw. geschlossen wird. Hierdurch kann in vorteilhafter Weise mittels des eingestellten Öffnungsquerschnitts die Ausbringmenge der Sämaschine entsprechend variiert werden, was bspw. bei Abschaltung einzelner Säagregate oder von Fahrgassen von Vorteil sein kann. In diesem Zusammenhang kann die Sämaschine weitere Sensoren oder dergl. aufweisen, mittels derer die Ausbringmenge des Produkts bzw. des Saatguts jeweils überwacht wird.

Auch könnte der Absperrschieber entsprechend der Breite der Dosiervorrichtung aus mehreren Sektionen bestehen, so dass bspw. nur durch einzelne Abschnitte der Dosiervorrichtung und/oder des Fördersystems ein Produktfluss aus dem Vorratsbehälter stattfindet. Die Abschnitte können jeweils unabhängig voneinander bewegt werden, so dass auch somit wiederum die Ausbringmenge einzelner Abschnitte variiert werden kann.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine perspektivische Ansicht eines Vorratsbehälters einer pneumatischen Sämaschine mit einer Absperrvorrichtung und einer Dosiervorrichtung.
Fig. 2 zeigt eine perspektivische Detailansicht des Vorratsbehälters gemäß Fig. 1 mit geschlossener Absperrvorrichtung und ausgeblendeten Seitenteilen des Vorratsbehälters.
Fig. 3 zeigt eine perspektivische Detailansicht des Vorratsbehälters gemäß Fig. 1 mit geöffneter Absperrvorrichtung und ausgeblendeten Seitenteilen des Vorratsbehälters.
Fig. 4 zeigt in zwei perspektivischen Detailansichten (Fig. 4a und Fig. 4b) die Absperrvorrichtung in geöffneter und geschlossener Position mit Durchführungen und ohne Vorratsbehälter.
Fig. 5 zeigt in verschiedenen schematischen Ansichten (Fig. 5a, Fig. 5b und Fig. 5c) die Funktionsweise einer Absperrvorrichtung, welche sich aus Sektionen zusammensetzt.

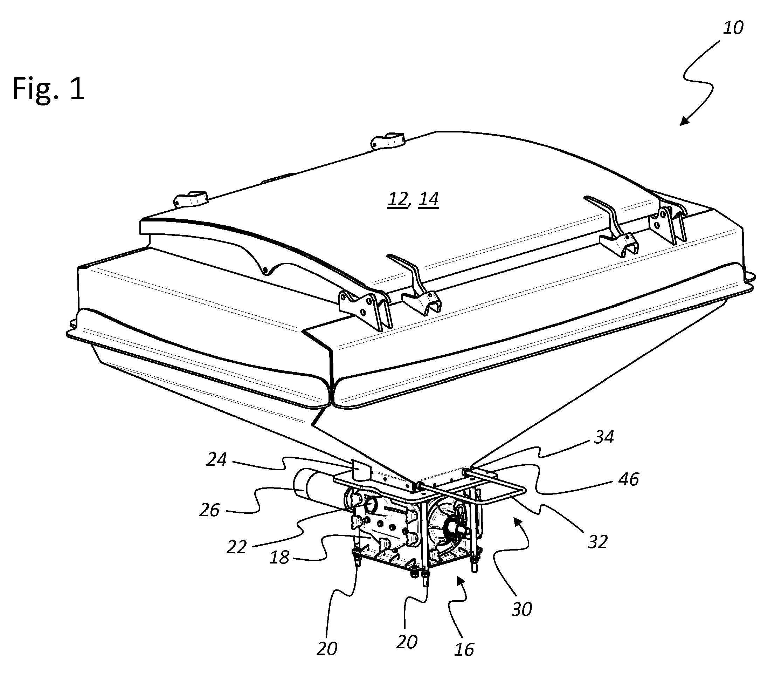

Für gleiche oder gleich wirkende Elemente der Erfindung werden in den Figuren 1 bis 5 jeweils identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße pneumatische Sämaschine ausgestaltet sein kann und stellen keine abschließende Begrenzung dar.

Die perspektivische Ansicht der Fig. 1 zeigt einen Vorratsbehälter 10, wie er in der Landwirtschaft in pneumatischen Sämaschinen Verwendung findet. Der Vorratsbehälter 10 besitzt eine obere Einfüllöffnung 12, mittels welcher das jeweils auszubringende Produkt in den Vorratsbehälter 10 gefüllt werden kann. Die Einfüllöffnung 12 wird mit einem Deckel 14 verschlossen, der den Vorratsbehälter 10 vorzugsweise druckdicht abschließt.

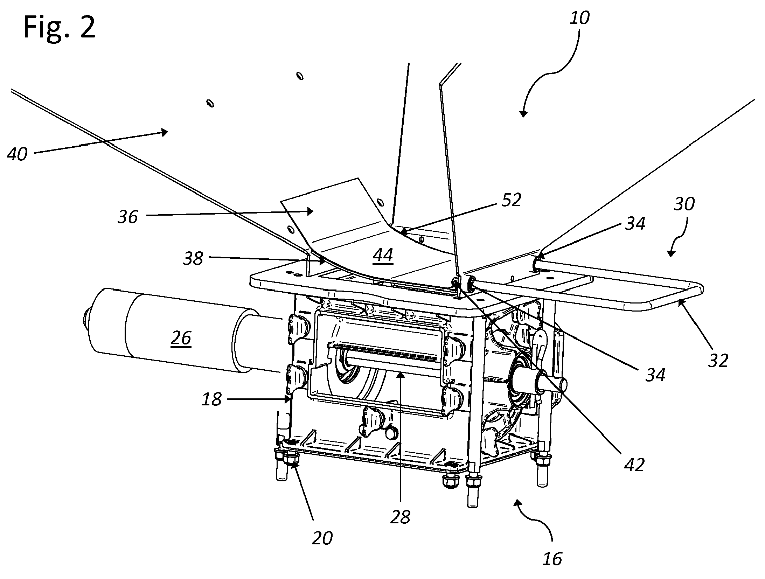

Im unteren Bereich weist der Vorratsbehälter 10 eine Flanschfläche 46 auf, an der mittels Schrauben 20 eine Dosiervorrichtung 16 angebaut ist. Die Dosiervorrichtung 16 besteht im Wesentlichen aus einem Gehäuse 18 und einem in diesem drehbar gelagerten Dosierorgan 28 (vgl. Fig. 2). Das Dosierorgan 28 wird mittels eines Antriebs 26 in Rotation gebracht und fördert bzw. dosiert das jeweilige Produkt aus dem Vorratsbehälter 10 in ein hier nicht dargestelltes Fördersystem, das bspw. ein pneumatisches Fördersystem sein kann. Oberhalb des Dosierorgans 28 bzw. im Vorratsbehälter 10 ist eine Absperrvorrichtung 30 angebracht. Diese Absperrvorrichtung 30 besteht im Wesentlichen aus einem Absperrschieber 36 (vgl. Fig. 2) und einer Betätigungseinheit 32. Die Betätigungseinheit 32 ist im gezeigten Ausführungsbeispiel als griffartiges Element ausgeführt und wird manuell durch eine Bedienperson betätigt. Ebenso vorstellbar wäre es jedoch auch, dass der Absperrschieber 36 über ein pneumatisch oder hydraulisch oder elektrisch arbeitendes Stellglied betätigt wird. Ebenso könnte dieses Stellglied sich im Inneren des Vorratsbehälters 10 oder in der Dosiervorrichtung 16 befinden. Die Betätigungseinheit 32 wird mittels Durchführungen 34 in das Innere des Vorratsbehälters 10 geführt. Um einen Druckverlust zu vermeiden, sind diese Durchführungen 34 mit Dichtelementen versehen, bspw. in Form von O-Ringen. Um für eine gute Abdichtung zu sorgen, weisen in diesem Zusammenhang die durchzuführenden Elemente der Betätigungseinheit 32 vorzugsweise einen runden Querschnitt auf.

Die Absperrvorrichtung 30 wird zwischen einer geöffneten Position, in welcher es dem jeweiligen Produkt ermöglicht wird, vom Vorratsbehälter 10 zum Dosierorgan 28 und/oder zum Fördersystem zu fließen, und einer geschlossenen Position, in welcher das Produkt daran gehindert wird, vom Vorratsbehälter 10 zum Dosierorgan 28 und/oder zum Fördersystem zu fließen, bewegt.

Um einen kontinuierlichen Produktfluss zu gewährleisten, kann der Vorratsbehälter 10 und die Dosiervorrichtung 16 jeweils mit einem Druck beaufschlagt werden, welcher vorzugsweise größer als der Atmosphärendruck ist. Dieser Druck kann bspw. über eine Leitung aus dem pneumatischen Fördersystem über einen Luftanschluss 22 in die Dosiervorrichtung 16 und/oder über einen Anschlussstutzen 24 in den Vorratsbehälter 10 eingeleitet werden, wobei auch andere Anschluss- oder Versorgungsmöglichkeiten vorstellbar wären.

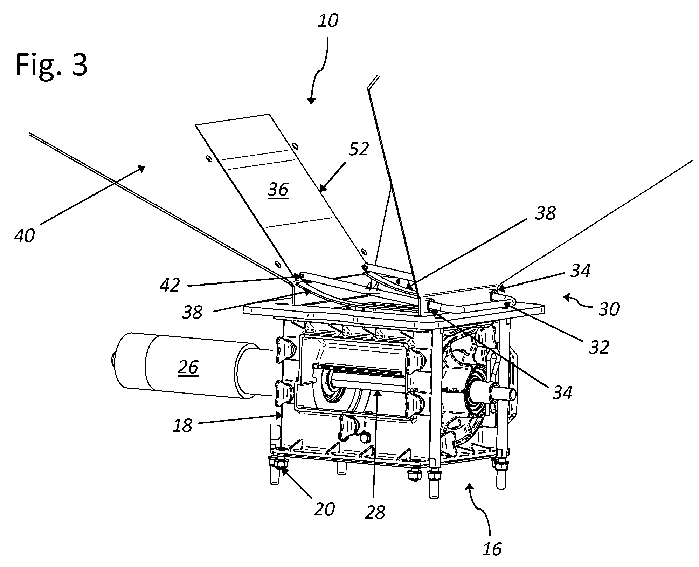

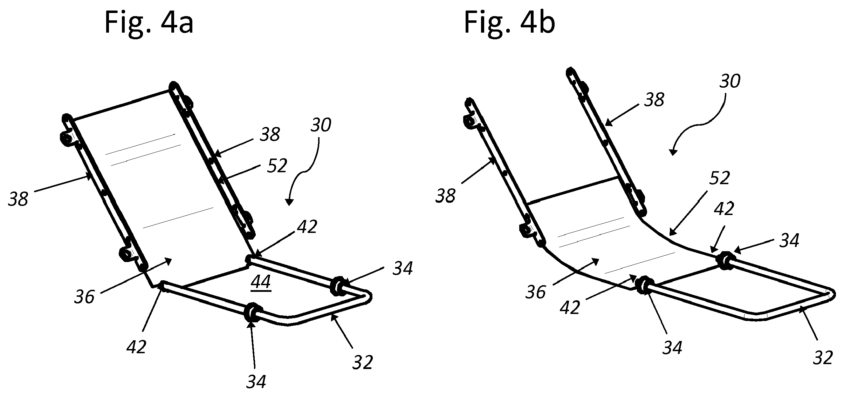

Die Figuren 2 und 3 sowie die Figuren 4a und 4b zeigen jeweils die Funktionsweise der Absperrvorrichtung 30 bzw. des Absperrschiebers 36, wobei die Figuren 2 und 4b diesen in geschlossener Position und die Figuren 3 und 4a diesen in geöffneter Position zeigen. Weiter sind in den Figuren 2 und 3 jeweils Seitenteile bzw. Seitenwände des Vorratsbehälters 10 und in den Figuren 4 der komplette Vorratsbehälter 10 sowie die Dosiervorrichtung 16 zum besseren Verständnis der Wirkungsweise des Absperrschiebers 36 ausgeblendet. Die Absperrvorrichtung 30 verschließt oder öffnet jeweils die Tanköffnung 44, von der aus das Produkt zur Dosiervorrichtung 16 fließen kann oder nicht.

Die Absperrvorrichtung 30 besteht jeweils zumindest aus einer Betätigungseinheit 32 und einem Absperrschieber 36, wobei diese mittels Verbindungselementen 42 verbunden werden. Die Betätigungseinheit 32 wird mit Durchführungen 34 in den Vorratsbehälter 10 hineingeführt. Die Betätigungseinheit 32 und die Durchführungen 34 weisen jeweils einen runden Querschnitt auf, wodurch eine Abdichtung beider Elemente zueinander vereinfacht wird, da Normteile wie O-Ringe oder dergl. Verwendung finden können. Ebenso wären jedoch auch andere Querschnitte und Abdichtmittel vorstellbar. Die Betätigungseinheit 32 ist griffartig ausgeführt und weist zwei Durchführungen 34 auf. Ebenso vorstellbar wären jedoch auch andere Ausgestaltungen und bspw. nur eine Durchführung. In einer bevorzugten Ausführungsform könnte die Betätigungseinheit 32 sich im inneren des Vorratsbehälters 10 und/oder der Dosiervorrichtung 16 befinden, wodurch keine Durchführungen 34 benötigt würden und ebenso die Abdichtung entfallen würde.

Die Absperrvorrichtung 30 weist einen Absperrschieber 36 auf, welcher sowohl bei geöffneter als auch bei geschlossener Position im inneren des Vorratsbehälters 10 und/oder der Dosiervorrichtung 16 verbleibt. Dies hat den Vorteil, dass für den Absperrschieber 36 keine zusätzlichen Abdichtmittel benötigt werden. Der Absperrschieber 36 weist jeweils zwischen und in der geöffneten und der geschlossenen Position sich verändernde bzw. unterschiedliche Radien und/oder Konturen 52 auf, wobei diese wiederum in geöffneter Position zumindest abschnittweise weitgehend parallel zu wenigstens einer Innenwand 40 des Vorratsbehälter 10 und/oder der Dosiervorrichtung 16 und in geschlossener Position zumindest abschnittweise weitgehend parallel zur wenigstens einer Flanschfläche 46 ist/sind.

Um den Absperrschieber 36 in unterschiedlich geformten und/oder dimensionierten oder generell in unterschiedlichen Vorratsbehältern 10 und/oder Dosiervorrichtungen 16 bzw. pneumatischen Sämaschinen einsetzen zu können, und um die beschriebene verbesserte Anpassung zu erreichen, ist der Absperrschieber 36 vorzugsweise aus einem elastischen bzw. flexiblen Material gefertigt. Dies hat den Vorteil, dass der Absperrschieber 36 sich den jeweiligen Innenwänden 40 entsprechend anpassen kann. Um dies noch zu verbessern, ist der Vorratsbehälter bspw. mit Führungen 38 ausgestattet, entlang derer, der Absperrschieber 36 bewegt wird bzw. entlang derer der Absperrschieber 36 sich anlegt.

Der Absperrschieber 36 ist vorzugsweise aus einem metallischen Werkstoff gefertigt, bspw. aus sog. Federblech. Ebenso vorstellbar wären jedoch auch nichtmetallische Materialen. Weiter weist der Absperrschieber 36 eine Dicke bzw. eine Materialstärke auf, welche kleiner ist als der Durchmesser der Körner des auszubringenden Produkts. Dies hat den Vorteil, dass der Absperrschieber 36 leicht bewegt werden kann, da somit durch diesen nicht viel Produkt verdrängt werden muss und dieser somit einfach durch das Produkt hindurch bewegt werden kann. In einer derartigen Ausgestaltung weist der Absperrschieber 36 eine Materialstärke von vorzugsweise nicht mehr als einem Millimeter auf, ggf. auch deutlich weniger. Aufgrund des elastischen Material und der geringen Materialstärke kann sich somit der Absperrschieber 36 entsprechend der Konturen der Innenwände des Vorratsbehälters 10 und/oder der Dosiervorrichtung 16 anpassen.

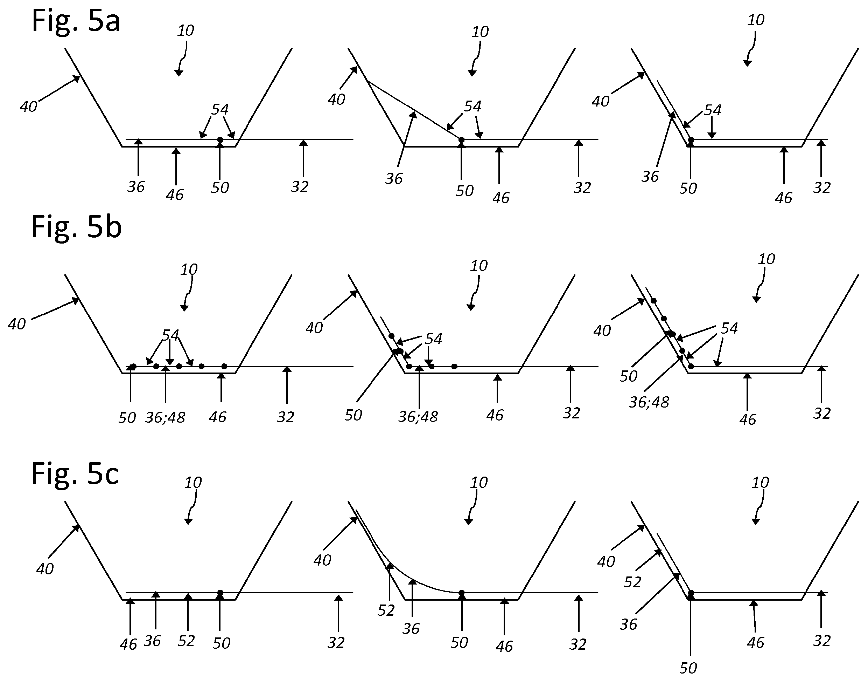

Ist in den Figuren 1 bis 4 der Absperrschieber 36 jeweils aus einem elastischen Material gefertigt, so zeigen die Figuren 5a; 5b und 5c jeweils eine weitere Ausgestaltungsmöglichkeit des Absperrschiebers 36. Der Absperrschieber 36 setzt sich hierbei jeweils aus sich zueinander beweglichen Sektionen 48 zusammen. Die Sektionen 48 sind jeweils mittels Gelenken 50 derartig verbunden, dass die Sektionen 48 jeweils einen sich verändernden Winkel 54 zueinander aufweisen können. Durch eine derartige Anordnung ist es ebenso möglich, dass der Absperrschieber 36 innerhalb des Vorratsbehälters 10 und/oder der Dosiervorrichtung 16 verbleiben kann. Die Betätigung kann wiederum mittels einer Betätigungseinheit 32 erfolgen, welche sich wiederum entweder innerhalb oder außerhalb des Vorratsbehälters 10 und/oder der Dosiervorrichtung 16 befinden kann. Ebenso können die Sektionen 48 wiederum derartig angeordnet sein, dass diese in geöffneter Position zumindest abschnittweise weitgehend parallel zu wenigstens einer Innenwand 40 des Vorratsbehälter 10 und/oder der Dosiervorrichtung 16 und in geschlossener Position zumindest abschnittweise weitgehend parallel zur wenigstens einer Flanschfläche 46 sind.

Die Fig. 5c zeigt darüber hinaus noch eine Kombination aus einem Absperrschieber 36, welcher aus zwei Sektionen 48 besteht, welche über Gelenke 50 verbunden sind, und welche zwischen und in der geöffneten und geschlossenen Position sich zueinander verändernde Winkel 54 und sich verändernde Radien und/oder Konturen 52 aufweist.

Die Figuren 5a bis 5c zeigen jeweils von links nach rechts den Bewegungsablauf des Absperrschiebers 36 bzw. der Absperrvorrichtung 30. Sind diese in der linken Ansicht jeweils in geschlossener Position und einem Winkel 54 von 180° zueinander angeordnet, so sind diese in der jeweils mittleren Position ca. zur Hälfte geöffnet und weisen zumindest abschnittweise einen Winkel 54 zueinander auf, der kleiner als 180° ist, oder sie weisen geänderte Radien oder Konturen 52 zueinander auf. In der jeweils rechten Ansicht ist der Absperrschieber 36 dann in der komplett geöffneten Position dargestellt.

Es sei hierbei noch erwähnt, dass in den Ausführungsbeispielen der Figuren 1 bis 5 die Absperrvorrichtung 30 jeweils oberhalb des Dosierorgans 28 im Vorratsbehälter 10 angeordnet wurde. Ebenso wäre jedoch auch eine Anordnung in der Dosiervorrichtung 16, insbesondere auch unterhalb des Dosierorgans 28 denkbar. Hierdurch kann jeweils mittels der Absperrvorrichtung 30 ein Produktfluss in ein Fördersystem verhindert bzw. unterbrochen werden. Zudem kann der der Absperrvorrichtung 30 zugeordnete Absperrschieber 36 sowohl in geschlossener als auch in geöffneter Position im Vorratsbehälter 10 und/oder der Dosiervorrichtung verbleiben.

Es sei erwähnt, dass der Absperrvorrichtung 30 gemäß einer vorteilhaften Ausgestaltung ein hier nicht gezeigtes Sensorelement zur Überwachung der Position des Absperrschiebers 36 und/oder der Absperrvorrichtung 30 zugeordnet sein kann.

Um die Ausbringmenge an Produkt einstellen zu können, kann die Absperrvorrichtung 30 darüber hinaus derartig konzipiert sein, dass diese jeweils nicht komplett geöffnet bzw. geschlossen wird, so dass aufgrund des variablen Öffnungsquerschnitts die Ausbringmenge in gewünschter Weise variiert werden kann. Hierzu kann die Sämaschine weitere Sensoren oder dergl. aufweisen, mittels derer die Ausbringmenge an Produkt jeweils überwacht und durch den Öffnungsgrad des Absperrschiebers 36 eingestellt werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Vorratsbehälter
- 12: Einfüllöffnung
- 14: Deckel
- 16: Dosiervorrichtung
- 18: Gehäuse
- 20: Schrauben
- 22: Luftanschluss
- 24: Anschlussstutzen
- 26: Antrieb
- 28: Dosierorgan
- 30: Absperrvorrichtung
- 32: Betätigungseinheit
- 34: Durchführung
- 36: Absperrschieber
- 38: Führung
- 40: Innenwand
- 42: Verbindungselemente
- 44: Tanköffnung
- 46: Flanschfläche
- 48: Sektion
- 50: Gelenk
- 52: Kontur, Radien
- 54: Winkel

## Patentansprüche

1. Pneumatische Sämaschine mit wenigstens einem Vorratsbehälter (10) zur Aufnahme und Bereitstellung eines auszubringenden Produkts, und mit einer diesem zugeordneten Dosiervorrichtung (16), in der wenigstens ein mit einem Antrieb (26) ausgestattetes Dosierorgan (28) drehbar angeordnet ist, um das durch den Vorratsbehälter (10) bereitgestellte Produkt in ein Fördersystem zu dosieren, wobei dem Vorratsbehälter (10) und/oder der Dosiervorrichtung (16) mindestens eine Absperrvorrichtung (30) zugeordnet ist, welche zwischen einer geöffneten Position, in welcher es dem Produkt ermöglicht wird, vom Vorratsbehälter (10) zur Dosiervorrichtung (16) und/oder zu einem Fördersystem zu fließen, und einer geschlossenen Position, in welcher das Produkt daran gehindert wird, vom Vorratsbehälter (10) zur Dosiervorrichtung (16) und/oder zu einem Fördersystem zu fließen, beweglich ist, wobei die Absperrvorrichtung (30) mindestens einen Absperrschieber (36) aufweist, welcher sowohl in geöffneter als auch in geschlossener Position innerhalb des Vorratsbehälter (10) und/oder der Dosiervorrichtung (16) verbleibt, und wobei der Absperrschieber (36) aus einem elastischen Material und/oder mehreren gegeneinander beweglichen Sektionen (48) gefertigt ist und zwischen der geöffneten und der geschlossenen Position veränderliche Konturen und/oder Radien (52) und/oder Winkel (54) der mehreren gegeneinander beweglichen Sektionen (48) zueinander aufweist.

2. Pneumatischen Sämaschine nach Anspruch 1, bei der dem Vorratsbehälter (10) und/oder der Dosiervorrichtung (16) jeweils Führungen (38) zugeordnet sind, entlang derer der Absperrschieber (36) zwischen der geöffneten und der geschlossenen Position seine Konturen und/oder Radien und/oder Winkel ändert.

3. Pneumatische Sämaschine nach Anspruch 1 oder 2, bei welcher der Absperrschieber (36) in geöffneter Position zumindest abschnittweise weitgehend parallel zu wenigstens einer Innenwand (40) des Vorratsbehälters (10) und/oder der Dosiervorrichtung (16) angeordnet ist.

4. Pneumatische Sämaschine nach einem der Ansprüche 1 bis 3, bei welcher der Absperrschieber (36) in geschlossener Position zumindest abschnittweise weitgehend parallel zu wenigstens einer Flanschfläche (46) des Vorratsbehälters (10) angeordnet ist.

5. Pneumatische Sämaschine nach einem der Ansprüche 1 bis 4, bei welcher der Absperrschieber (36) und/oder dessen Sektionen (48) aus einem metallischen oder nicht metallischen Material gefertigt sind.

6. Pneumatische Sämaschine nach einem der Ansprüche 1 bis 5, bei welcher der Absperrschieber (36) und/oder dessen Sektionen (48) eine Materialstärke aufweist/aufweisen, welche kleiner ist als der Durchmesser der Körner des auszubringenden Produkts, vorzugsweise kleiner oder gleich einem Millimeter.

7. Pneumatische Sämaschine nach einem der Ansprüche 1 bis 6, bei welcher der Absperrschieber (36) mittels einer Betätigungseinheit (32) zwischen der geöffneten und der geschlossenen Position bewegbar ist.

8. Pneumatische Sämaschine nach Anspruch 7, bei der die Betätigungseinheit (32) durch einen elektrisch und/oder hydraulisch und/oder pneumatisch arbeitenden Stellantrieb gebildet ist.

9. Pneumatische Sämaschine nach Anspruch 7 oder 8, bei der die Betätigungseinheit (32) mittels Durchführungen (34) durch den Vorratsbehälter (10) und/oder die Dosiervorrichtung (16) zum Absperrschieber (36) geführt wird.

10. Pneumatische Sämaschine nach Anspruch 9, bei welcher der Betätigungseinheit (32) und/oder der Durchführung (34) Dichtmittel zugeordnet sind.

11. Pneumatische Sämaschine nach einem der Ansprüche 7 bis 10, bei der die Betätigungseinheit (32) einen runden Querschnitt aufweist.

12. Pneumatische Sämaschine nach einem der Ansprüche 1 bis 11, bei der die Absperrvorrichtung (30) und/oder der Absperrschieber (36) in Abhängigkeit von der auszubringenden Menge an Produkt die Tanköffnung (44) vergrößern oder verkleinern.

13. Pneumatische Sämaschine nach einem der Ansprüche 1 bis 12, bei welcher der Absperrschieber (36) und oder die Absperrvorrichtung (30) aus mehreren einzelnen Abschnitten besteht, welche jeweils unabhängig voneinander bewegt werden können.

14. Pneumatische Sämaschine nach einem der Ansprüche 1 bis 13, bei welcher der Vorratsbehälter (10) und/oder die Dosiervorrichtung (16) ein Druckniveau aufweisen, welches größer als der Atmosphärendruck ist.
